# EUROPÄISCHE PATENTSCHRIFT

(11) **EP 1 979 664 B1**
(45) Veröffentlichungstag und Bekanntmachung des Hinweises auf die Patenterteilung: **10.06.2015**
(21) Anmeldenummer: 07700637.7
(22) Anmeldetag: 19.01.2007
(51) Int. Cl.: F16L 21/06, F16L 33/04

(54) **SPANNSCHELLE FÜR HOCHDRUCK-SCHLÄUCHE**
CLAMP FOR HIGH-PRESSURE TUBES
COLLIER DE SERRAGE DESTINÉ À DES TUYAUX FLEXIBLES HAUTE PRESSION

(30) Priorität: 23.01.2006 CH 105062006
(43) Veröffentlichungstag der Anmeldung: 15.10.2008
(73) Patentinhaber: Straub Werke AG, 7323 Wangs (CH)
(72) Erfinder: VOGLER, Stephan, CH-8887 Mels (CH)
(74) Vertreter: Rosenich, Paul
(86) Internationale Anmeldenummer: PCT/IB2007/050184
(87) Internationale Veröffentlichungsnummer: WO 2007/083283

(56) Entgegenhaltungen:
- WO-A-03/104706
- GB-A- 1 329 087
- US-A1- 2002 014 772
- US-A1- 2004 178 632

## Beschreibung

Die Erfindung bezieht sich auf eine zweiteilige Spannschelle, insbesondere für die Befestigung von Hochdruck-Schläuchen auf rohrähnlichen Fittings, bestehend aus zwei im wesentlichen identischen, schalenförmigen Gehäusehälften, Spannschrauben zum Zusammenziehen der beiden Gehäusehälften und einer Einlage zum Überbrücken der zwischen den beiden Gehäusehälften entstehenden, in axialer Richtung verlaufenden Spalte,

Solche Spannschellen können je nach Verwendung unterschiedlich ausgebildet sein. So ist beispielsweise aus der GB 1 329 087 eine zweiteilige Spannschelle bekannt, die aus zwei aus Guss hergestellten Gehäusehälften besteht. In die Gehäusehälften sind mit Zähnen versehene Einlagen eingesetzt, welche die Spalte zwischen den beiden Gehäusehälften überbrücken, ein Heraustreten der Schläuche verhindern und eine formschlüssige Verbindung mit den zu verbindenden Schläuchen herstellen sollen.

Diese Spannschellen ergeben jedoch lediglich eine Verquetschung der Schläuche und ermöglichen keine gleichmässige Verteilung des Spanndruckes über den gesamten Umfang.

Eine weitere bisher übliche Methode ist die Verwendung von mehreren nebeneinander angeordneten Spannbändern, welche festgezurrt und anschliessend verklemmt werden. Diese Methode ist relativ aufwändig und weist zudem den erheblichen Nachteil auf, dass ein Nachspannen nicht mehr möglich ist.

Der Erfindung liegt daher die Aufgabe zugrunde, eine nachspannbare Spannschelle zu schaffen, die eine hohe Verspannung und eine gleichmässige Druckverteilung über den gesamten Umfang ermöglicht.

Gemäss der Erfindung wird dies dadurch erreicht, dass sich die Einlage über wenigstens beide Spalte erstreckt. Die zu verbindenden Schläuche werden somit über mehr als die Hälfte ihres Umfanges von der Einlage umgeben. Zumindest in diesem Bereich herrscht also eine gleichmässige Druckverteilung vor. Durch den Einsatz von Gleitmitteln kann verhindert werden, dass es zu Faltenbildungen kommt.

Die Einlage ist zweckmässigerweise bandförmig ausgebildet. Durch eine glatte Oberfläche der Einlage kann eine gute Gleitfähigkeit der Einlage einerseits gegenüber den sie umgebenden Gehäusehälften und andererseits gegenüber den zu verspannenden Schläuchen erreicht werden.

Die Einlage besteht vorteilhaft aus Federstahl. Federstahl weist eine sehr hohe Festigkeit und Härte auf und ermöglicht daher geringe Wandstärken je nach Baugrösse der Spannschelle in der Grössenordnung von einigen Zehntels-Millimetern.

Die Einlage erstreckt sich zweckmässigerweise über wenigstens 2/3 des Umfanges. Der von der Einlage nicht abgedeckte Bereich, in dem beim Verspannen die Aufstauchung des Schlauches erfolgt, ist somit relativ gering.

Noch vorteilhafter ist eine Ausführung, bei der sich die Einlage über wenigstens 3/4 des Umfanges erstreckt. Im Bereich der Einlage ergibt sich eine gleichmässige Verteilung des Spanndruckes über den Umfang.

Die Einlage ist zweckmässigerweise mit einer der beiden Gehäusehälften verbunden. Dadurch ist gewährleistet, dass immer beide Spalte überdeckt und zudem beim Verspannen nicht unbeabsichtigt verschoben werden kann.

Die Verbindung der Einlage mit den sie umgebenden Gehäusehälften kann auf unterschiedliche Weise wie bspw. Schrauben oder Nieten erfolgen. Besonders vorteilhaft ist es jedoch, wenn die Einlage über wenigstens eine Fixierung mit der einen Gehäusehälfte verbunden ist. Die Fixierung erfolgt vorzugsweise durch Punktschweissungen. Punktschweissungen sind einfach und rasch ausführbar und benötigen zudem keine Vorbereitung der miteinander zu verbindenden Teile.

Damit eine gleichmässige Kraft- bzw. Druckverteilung gegenüber den Gehäusehälften ermöglicht wird, ist es zweckmässig, dass die Einlage symmetrisch zur sie zur Mehrheit umgebenden Gehäusehälfte angeordnet ist.

Im Bereich des Überganges zwischen der Einlage und dem Bereich ohne Einlage kann es beim Verspannen zu Aufstauchungen des zu verspannenden Schlauches kommen. Die freien Enden der Einlage sind daher vorteilhaft umfangsseitig konisch auslaufend ausgebildet. Die Einlage bildet somit in diesem Bereich einen Keil, der sich beim Verspannen umfangsseitig zwischen die Gehäusehälften und den Schlauch schiebt und ein Aufstauchen des Schlauches verhindert.

Die beiden Gehäusehälften können unterschiedlich ausgebildet sein. Eine vorteilhafte Ausführungsform besteht darin, das die Gehäusehälften wenigstens teilweise segmentförmig ausgebildet und aus Blech hergestellt sind und an ihren umfangsseitigen Enden umgebogene, mit dem segmentförmigen Bereich verbundene Laschen angeformt sind. Diese Bauform ist in ähnlicher Weise von Rohrkupplungen her bekannt, welche eine sehr hohe Verspannung ermöglichen.

Zweckmässigerweise sind in den Laschen Bolzen zur Aufnahme der Spannschrauben angeordnet. Dabei können beide Bolzen gleich als sog. Lochbolzen ausgebildet sein und das Verspannen mit Hilfe von Schrauben und Muttern erfolgen, oder einer der beiden Bolzen kann mit der Aufnahme des Gewindebereichs der Spannschrauben dienenden Gewindelöchern versehen werden.

Die erfindungsgemässe Spannschelle wird vorteilhaft zur druck- und zugfesten Verbindung dickwandiger Schläuche mittels in die miteinander zu verbindenden Enden der Schläuche einzuführender Stützhülsen eingesetzt.

Weitere Ausbildungen der Erfindung sind in den Figuren und in den abhängigen Patentansprüchen angegeben.

Die Bezugszeichenliste ist Bestandteil der Offenbarung.

Anhand von Figuren wird die Erfindung symbolisch und beispielhaft näher erläutert. Es zeigen dabei
Fig.1 - eine erfindungsgemässe Spannschelle, in Stirnansicht,
Fig.2 - eine Seitenansicht der Spannschelle gemäss Fig. 1

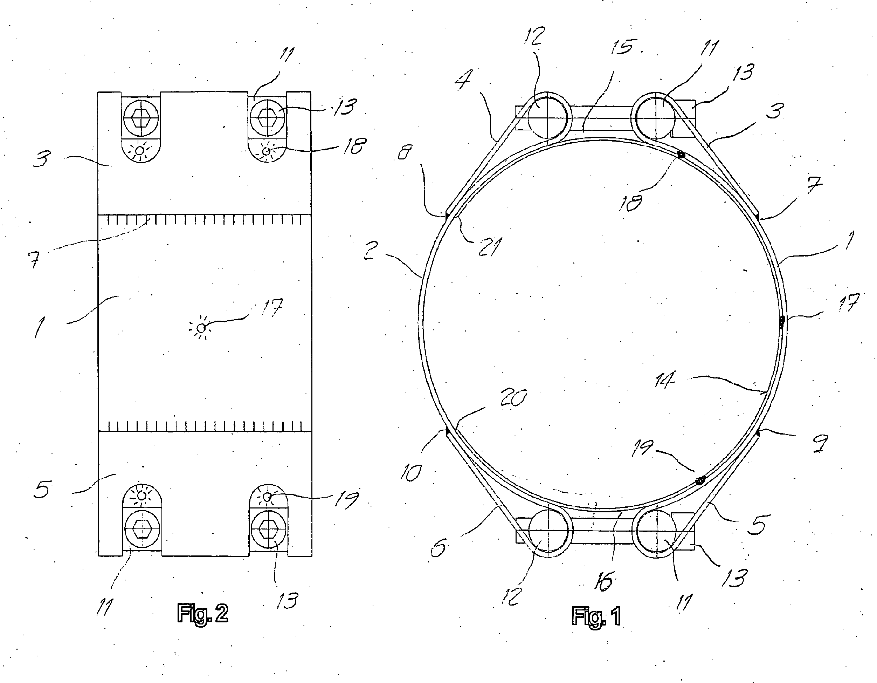

Die aus den Fig. 1 und 2 ersichtliche Spannschelle besteht aus einer Schalenförmigen Gehäusehälfte 1 und einer symmetrisch dazu ausgebildeten und angeordneten Gehäusehälfte 2. Die Endbereiche der Gehäusehälfte 1 sind als umgebogene Laschen 3, 5, die Endbereiche der Gehäusehälfte 2 als umgebogene Laschen 4, 6 ausgebildet. Das freie Ende der Laschen 3,4,5,6 ist beispielsweise durch eine Schweissverbindung 7, 8, 9, 10 mit einem segmentförmigen Bereich der Gehäusehälften 1, 2 verbunden. Die Verbindung kann jedoch auch schweisslos, beispielsweise durch eine Pressfügeverbindung oder Vernietung hergestellt werden.

In den Laschen 3, 5 sind Lochbolzen 11 angeordnet. Die Laschen 4, 6 werden von Gewindebolzen 12 durchsetzt. Die Lochbolzen 11 und die Gewindebolzen 12 werden mittels Spannschrauben 13 miteinander verbunden. Die Spannschrauben 13 dienen zum Zusammenziehen der beiden Gehäusehälften 1, 2 und damit dem Verspannen des von der Spannschelle umgebenen, nicht dargestellten Schlauches.

Symmetrisch zur Gehäusehälfte 1 ist eine Einlage 14 angeordnet. Die Einlage14 besteht vorzugsweise aus dünnem Federstahlblech mit einer Wandstärke von einigen Zehntels-Millimetern. Die Einlage 14 überdeckt die zwischen den beiden Gehäusehälften 1, 2 entstehenden Spalte 15, 16 und verhindert somit ein Heraustreten des zu verspannenden Schlauches an dieser Stelle. Die Einlage 14 erstreckt sich vorzugsweise über etwa 2/3 bis 3/4 des Umfanges. Die Einlage 14 ist an wenigstens drei Fixierungen 17, 18, 19, beispielsweise durch eine Punktschweissung, mit der Gehäusehälfte 1 verbunden. Dadurch wird sichergestellt, dass die Einlage 14 beim Verspannen der Spannschelle nicht verschoben werden kann. Die Enden 20, 21 der Einlage 14 sind keilförmig zugespitzt, sodass sich beim Verspannen die Einlage 14 zwischen die Gehäusehälfte 1 und den zu verspannenden Schlauch schieben kann und es nicht zu Aufstauchungen kommt.

### Bezugszeichenlist

- 1: Gehäusehälfte
- 2: Gehäusehälfte
- 3: Lasche
- 4: Lasche
- 5: Lasche
- 6: Lasche
- 7: Verbindung
- 8: Verbindung
- 9: Verbindung
- 10: Verbindung
- 11: Lochbolzen
- 12: Gewindebolzen
- 13: Spannschraube
- 14: Einlage
- 15: Spalt
- 16: Spalt
- 17: Fixierung
- 18: Fixierung
- 19: Fixierung
- 20: Ende
- 21: Ende

## Patentansprüche

1. Zweltellige Spannschelle, Insbesondere für die Befestigung von Hochdruck-Schläuchen auf rohrähnlichen Fittings, bestehend aus zwei im wesentlichen identischen, schalenförmigen Gehäusehälften (1, 2), Spannschrauben (13) zum Zusammenziehen der beiden Gehäusehälften (1, 2) und einer Einlage (14) zum Überbrücken der zwischen den beiden Gehäusehälften entstehenden, in axialer Richtung verlaufenden Spalte (15, 16), **dadurch gekennzeichnet, dass** sich die Einlage (14) Ober wenigstens beide Spalte (15, 16) erstreckt.

2. Spannschelle nach Anspruch 1, **dadurch gekennzeichnet, dass** die Einlage (14) bandförmig ausgebildet ist.

3. Spannschelle nach einem der vorhergehenden Ansprüche, **dadurch gekennzeichnet, dass** die Einlage (14) aus Federstahl besteht.

4. Spannschelle nach einem der vorhergehenden Ansprüche, **dadurch gekennzeichnet, dass** sich die Einlage (14) über wenigstens 2/3 des Umfanges erstreckt:

5. Spannschelle nach Anspruch 4, **dadurch gekennzeichnet, dass** sich die Einlage (14) über we nigstens 3/4 des Umfanges erstreckt.

6. Spannschelle nach einem der vorhergehenden Ansprüche, **dadurch gekennzeichnet, dass** die Einlage (14) mit einer der beiden Gehäusehälften (1, 2) verbunden list.

7. Spannschelle nach Anspruch 6, **dadurch gekennzeichnet, dass** die Einlage (14) über wenigstens eine Fixierung (17, 18, 19) mit einer der beiden Gehäusehälften (1, 2) verbunden ist.

8. Spannschelle nach einem der vorhergehenden Ansprüche, **dadurch gekennzeichnet, dass** die Einlage (14) symmetrisch zu der sie zur Mehrheit umgebenden Gehäusehälfte (1) angeordnet ist.

9. Spannschelle nach einem der vorhergehenden Ansprüche, **dadurch gekennzeichnet, dass** die freien Enden (20, 21) der Einlage (14) umfangsseltig konisch auslaufend ausgebildet sind.

10. Spannschelle nach einem der vorhergehenden Ansprüche, **dadurch gekennzeichnet, dass** die Gehäusehälften (1, 2) wenigstens teilweise segmentförmig ausgebildet und aus Biech hergestellt sind und an ihren umgängsseitigen Endbereichen umgebogene, mit dem segmentförmigen Bereich verbundene Laschen (3, 4, 5, 6) angeformt sind.

11. Spannschelle nach Anspruch 10, **dadurch gekennzeichnet, dass** in den Laschen (3, 4, 5, 6) Bolzen (11, 12) zur Aufnahme der Spannschrauben (13) angeordnet sind.

12. Verwendung einer Spannschelle nach einem der vorhergehenden Ansprüche, **dadurch gekennzeichnet, dass** sie zum druck- und zugfesten Verbinden dickwandiger Schläuche mittels in die miteinander zu verbindenden Enden der Schläuche einzuführender Stützhülsen eingesetzt werden.

## Claims

1. A two-part clamping clip, in particular for fastening high-pressure hoses on tubular fittings, comprising two essentially identical shell-shaped housing halves (1, 2), clamping screws (13) for drawing together the two housing halves (1, 2) and an insert (14) for bridging the gaps (15, 16) that arise between the two housing halves and run in an axial direction, **characterized in that** the insert (14) extends over at least both gaps (15, 16).

2. The clamping clip according to claim 1, **characterized in that** the insert (14) is constituted strip-shaped.

3. The clamping clip according to any one of the preceding claims, **characterized in that** the insert (14) is made of spring steel.

4. The clamping clip according to any one of the preceding claims, **characterized in that** the insert (14) extends over at least 2/3 of the circumference.

5. The clamping clip according to claim 4, **characterized in that** the insert (14) extends over at least 3/4 of the circumference.

6. The clamping clip according to any one of the preceding claims, **characterized in that** the insert (14) is connected to one of the two housing halves (1, 2).

7. The clamping clip according to claim 6, **characterized in that** the insert (14) is connected by at least one fixing means (17, 18, 19) to one of the two housing halves (1, 2).

8. The clamping clip according to any one of the preceding claims, **characterized in that** the insert (14) is disposed symmetrically with respect to the housing half (1) predominantly surrounding it.

9. The clamping clip according to any one of the preceding claims, **characterized in that** the free ends (20, 21) of the insert (14) are circumferentially constituted tapering conically.

10. The clamping clip according to any one of the preceding claims, **characterized in that** the housing halves (1, 2) are constituted at least partially segment-shaped and produced from sheet metal and bent-round straps (3, 4, 5, 6) connected to the segment-shaped region are formed at the circumferential end regions of said housing halves.

11. The clamping clip according to claim 10, **characterized in that** bolts (11, 12) for receiving the clamping screws (13) are disposed in the straps (3, 4, 5, 6).

12. Use of a clamping clip according to any one of the preceding claims, **characterized in that** it is used for the compression- and tension-proof connection of thick-walled hoses by means of support sleeves to be introduced into the ends of the hoses to be connected together.

## Revendications

1. Collier de serrage en deux parties, en particulier pour fixer des flexibles haute pression sur des raccords tubulaires, composé de deux moitiés de logement (1, 2) en forme de coque essentiellement identiques, de vis de serrage (13) pour serrer les deux moitiés de logement (1, 2) et d'un insert (14) pour combler la fente (15, 16) produite entre les deux moitiés de logement dans le sens axial, **caractérisé en ce que** l'insert (14) s'étend au-dessus des deux fentes (15, 16) au moins.

2. Collier de serrage selon la revendication 1, **caractérisé en ce que** l'insert (14) est en forme de bande.

3. Collier de serrage selon l'une des revendications précédentes, **caractérisé en ce que** l'insert (14) est en acier à ressort.

4. Collier de serrage selon l'une des revendications précédentes, **caractérisé en ce que** l'insert (14) est s'étend sur au moins 2/3 du pourtour.

5. Collier de serrage selon la revendication 4, **caractérisé en ce que** l'insert (14) est s'étend sur au moins 3/4 du pourtour.

6. Collier de serrage selon l'une des revendications précédentes, **caractérisé en ce que** l'insert (14) est relié à l'une des deux moitiés de logement (1, 2).

7. Collier de serrage selon la revendications 6, **caractérisé en ce que** l'insert (14) est relié à l'une des deux moitiés de logement (1, 2) par au moins une fixation (17, 18, 19).

8. Collier de serrage selon l'une des revendications précédentes, **caractérisé en ce que** l'insert (14) est disposé symétriquement à la moitié de logement (1) l'entourant en majorité.

9. Collier de serrage selon l'une des revendications précédentes, **caractérisé en ce que** les extrémités libres (20, 21) de l'insert (14) sont formées en finissant coniques sur le pourtour.

10. Collier de serrage selon l'une des revendications précédentes, **caractérisé en ce que** les moitiés de logement (1, 2) sont formées au moins partiellement en segments et sont fabriquées en tôle, et des brides (3, 4, 5, 6) reliées à la partie formée en segments sont formées sur leurs extrémités côté pourtour.

11. Collier de serrage selon la revendication 10, **caractérisé en ce que** des chevilles (11, 12) sont disposées dans les brides (3, 4, 5, 6) pour recevoir les vis de serrage (13).

12. Emploi d'un collier de serrage selon l'une des revendications précédentes, **caractérisé en ce qu'**il est employé pour la liaison résistante à la pression et à la traction de flexibles à paroi épaisse au moyen de manchons d'appui à introduire dans les extrémités des flexibles à relier entre elles.
